(19) Europäisches Patentamt
European Patent Office
Office européen des brevets

(11) **EP 3 400 458 B1**

(12) **EUROPÄISCHE PATENTSCHRIFT**

(45) Veröffentlichungstag und Bekanntmachung des Hinweises auf die Patenterteilung:
**13.10.2021 Patentblatt 2021/41**

(21) Anmeldenummer: **17700028.8**

(22) Anmeldetag: **03.01.2017**

(51) Int Cl.:
*G01S 7/40* *(2006.01)*   *G01S 13/87* *(2006.01)*

(86) Internationale Anmeldenummer:
**PCT/EP2017/050056**

(87) Internationale Veröffentlichungsnummer:
**WO 2017/118621 (13.07.2017 Gazette 2017/28)**

(54) **VERFAHREN UND SYSTEM ZUR VERRINGERUNG VON STÖRUNGEN DURCH PHASENRAUSCHEN IN EINEM RADARSYSTEM**

METHOD AND SYSTEM FOR THE REDUCTION OF DISTURBANCE THROUGH PHASE NOISE IN A RADAR SYSTEM

PROCÉDÉ ET SYSTÈME POUR LA RÉDUCTION DE PERTURBATION PAR BRUIT DE PHASE DANS UN SYSTÈME RADAR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.01.2016 DE 102016100107**

(43) Veröffentlichungstag der Anmeldung:
**14.11.2018 Patentblatt 2018/46**

(73) Patentinhaber: **Symeo GmbH**
**85579 Neubiberg (DE)**

(72) Erfinder:
• **VOSSIEK, Martin**
**90766 Fürth (DE)**
• **GOTTINGER, Michael**
**91054 Buckenhof (DE)**
• **KIRSCH, Fabian**
**91052 Erlangen (DE)**
• **GULDEN, Peter**
**85435 Erding (DE)**

(74) Vertreter: **Pfrang, Tilman**
**Meissner Bolte Patentanwälte**
**Rechtsanwälte Partnerschaft mbB**
**Widenmayerstraße 47**
**80538 München (DE)**

(56) Entgegenhaltungen:
**WO-A2-03/047137      AT-A4- 506 707**
**DE-A1-102014 104 273**

**Beschreibung**

Stand der Technik und Anwendungsgebiet:

Die Erfindung beschreibt ein Verfahren zur Verarbeitung von Funksignalen, die von mindestens zwei nicht kohärenten Sende- und Empfangseinrichtungen NKSE1 und NKSE2 ausgesendet, insbesondere ausgestrahlt und jeweils zu einer anderen NKSE übertragen und dort empfangen werden. Die zumindest zwei Sende- und Empfangseinrichtungen sind dabei mit zumindest teilweise eigenständigen Vorrichtungen zur Signalerzeugung (Signalquellen) ausgestattet. Die eigenständige Signalerzeugung führt dazu, dass die erzeugten Signale der unterschiedlichen NKSE zunächst keinen definierten Phasenbezug zueinander aufweisen, also nicht kohärent zueinander sind.

Verteilt angeordnete Radarsysteme können dabei Systeme mit zumindest zwei NKSE sein, zwischen denen die Signale auf indirekter Verbindung (an Objekten, Streukörpern oder Grenzschichten reflektiert) oder auf direktem Weg (über Sichtverbindung) von zumindest einem Sender zu zumindest einem Empfänger übertragen werden. Die Radar-Netzwerke können dazu dienen, mit mehreren NKSE eine Objektszene abzubilden bzw. Eigenschaften wie Geschwindigkeit oder Entfernung oder die Pose von Objekten zu erfassen. Die Radar-Netzwerke können aber auch dazu dienen, den Abstand oder die Pose oder die Relativgeschwindigkeit mehrerer NKSE zueinander zu bestimmen. Im ersten Fall spricht man häufig auch von Primärradar-Systemen und im zweiten Fall von Sekundärradar-Systemen oder Funkortungssystemen.

Bei Radarsystemen strebt man eine möglichst große räumliche Apertur an, um eine gute Winkelauflösung zu erreichen. Der Begriff Apertur kennzeichnet hierbei eine Fläche oder einen Raumbereich auf der bzw. in dem mehrere Einzelantennen angeordnet sind - bzw. eine einzelne Antenne an mehrere Orte bewegt wird, und die Signale der Einzelantennen beim Senden zu einem Summensignal kombiniert werden und/oder nach dem Empfang kombiniert werden. Wichtig ist im Zusammenhang mit der vorliegenden Erfindung, dass die Signale kohärent d.h. mit definiertem Phasenbezug kombiniert werden. Die Kombination der Sende- und/oder Empfangssignale kann physikalisch durch Überlagerung von Wellen oder nach dem Empfang der Signale rechnerisch erfolgen. Man spricht in diesem Zusammenhang auch häufig von sogenannten Apertursyntheseverfahren bzw. von Verfahren mit synthetischer Apertur. Derartige Apertur-Anordnungen sind auch unter den Begriffen MIMO, SIMO oder MISO bekannt. MIMO (englisch Multiple Input Multiple Output) bezeichnet in der Nachrichtentechnik oder der Radartechnik ein Verfahren bzw. ein Übertragungs-System für die Nutzung mehrerer Sende- und Empfangsantennen. Bei einem MIMO System verfügen Sender und Empfänger über mehrere Antennen; bei einem SIMO-System (englisch Single Input, Multiple Output) verfügt der Sender über eine Antenne und der Empfänger über viele und bei MISO (englisch Multiple Input, Single Output) verfügt der Sender über viele Antennen und der Empfänger über nur eine Antenne.

Will man mit mehreren Antennenelementen eine große Apertur synthetisieren, so ist es mit zunehmender Aperturgröße zunehmend problematisch, Signale mit hohen Frequenzen innerhalb dieser Anordnungen kohärent zu verteilen. Daher wird ein Zusammenfassen verteilter Anordnungen entweder durch Synchronisation auf niedriger Frequenzebene oder mittels Post-Processing angestrebt. Dadurch wird die zumindest teilweise getrennte Erzeugung der Hochfrequenzsignale ermöglicht, idealerweise können komplett unabhängige Submodule verwendet werden. Allerdings entstehen dadurch technische Schwierigkeiten im Bereich der Synchronisation der verteilten Einheiten und es entsteht ein erhöhter störender Einfluss des Phasenrauschens.

Bei verteilten Radarsystemen besteht auf Grund der Aufteilung auf mindestens zwei örtlich separate, (in Bezug auf die jeweils andere Sende- und Empfangseinheit) nicht-kohärente Sende- und Empfangseinheiten (NKSE) in jedem Fall der Bedarf, die Einflüsse der zumindest teilweise eigenständigen Signalerzeugungsquellen, insbesondere auf die Synchronisation und den Phasenrauschanteil, in den mindestens zwei NKSE zu kompensieren. Eine komplett eigenständige Erzeugung der Hochfrequenzsignale liegt vor, wenn der Systemtakt in jeder NKSE lokal erzeugt wird, beispielsweise mit einem Hochfrequenzoszillator oder mit einem Quarzoszillator oder einem MEMS Schwinger in Verbindung mit einem Hochfrequenzoszillator und einer Phasenregelschleife. Eine teilweise eigenständige Erzeugung der Hochfrequenzsignale ist beispielsweise das Verteilen eines gemeinsamen, niederfrequenteren Systemtaktes oder eines Referenzsignals zwischen den NKSE, aus dem anschließend mittels Phased Locked Loop, durch Vervielfachen oder durch andere frequenzvergleichenden Mechanismen das Hochfrequenzsignal erzeugt oder abgeleitet wird.

Ein erster Ansatz, die Synchronisation zu erreichen und den Einfluss des Phasenrauschens zu reduzieren, wird im Folgenden beschrieben. Hierbei senden und empfangen zumindest zwei NKSE (ungefähr) zur gleichen Zeit über den gleichen, reziproken Funkkanal im Vollduplexverfahren. Die Sende- und Empfangssignale werden jeweils miteinander gemischt und so je ein Vergleichssignal in jeder der zumindest zwei NKSE gebildet. Wegen der wechselseitigen und (nahezu) gleichzeitigen Übertragung ist in den Vergleichssignalen (bezeichnet auch als Mischsignale, Zwischenfrequenz-Signale, Beatsignale) jeweils das Phasenrauschen beider Signalquellen enthalten. Es werden die Daten von zumindest einem der Vergleichssignale, nachdem es von einem A/D-Wandler abtastet wurde, zur anderen Einheit übertragen, so dass in dieser NKSE beide Vergleichssignale vorliegen. Durch eine Korrelation oder Multiplikation dieser beiden Vergleichssignale zu einem sogenannten Vergleichs-Vergleichssignal kann der Einfluss des Phasenrauschens stark unterdrückt und eine kohärente Messung ermöglicht werden. Nach diesem Vorgang ist es möglich, mit einem solchen System auch Geschwindigkeiten, welche durch Dopplerverschiebung der Trägerfrequenz detektiert werden können, zu messen.

Beim Stand der Technik kommt es insbesondere bei Radarsignalen mit mehreren Signalkomponenten, d.h. bei Signalen, die mehrere Ziele oder mehrere Signalübertragungspfade umfassen, zu Störungen. Hierdurch wird die erzielbare Genauigkeit und Reichweite reduziert. Zudem ist der Rechenaufwand hoch.

Die Aufgabe der Erfindung besteht darin, ein Verfahren und System zur Verringerung von Störungen durch Phasenrauschen in einem Radarsystem vorzuschlagen, welche die genannten Nachteile vermeiden. Insbesondere sollen Störungen mit möglichst geringem Rechenaufwand reduziert werden.

Diese Aufgabe wird gelöst durch ein Verfahren mit den Merkmalen gemäß Anspruch 1 sowie ein entsprechendes System und eine entsprechende Verwendung und. Vorteilhafte Ausgestaltungen sind insbesondere Gegenstand abhängiger Ansprüche.

Gegenstand der Erfindung sind Verfahren, mit denen die zwischen den NKSE übertragenen Signale derart verarbeitet werden, dass Vergleichssignale entstehen, die vorteilhafte Eigenschaften aufweisen, die sonst eigentlich nur Radarsignale aufweisen, die mit nur einer gemeinsamen Vorrichtung zur Signalerzeugung, also mit kohärenten Signalquelle arbeiten. Gegenstand der Erfindung sind insbesondere Verfahren zur Reduzierungen von störenden Effekten, die durch das nicht korrelierte Phasenrauschen der mehreren eigenständigen Vorrichtungen zur Signalerzeugung hervorgerufen werden. Das Verfahren ist besonders vorteilhaft auf verteilt angeordnete Radarsysteme, sogenannte Radar-Netzwerke, anwendbar.

Im Bereich der Radarsignalverarbeitung möchte man die empfangenen Signale zu möglichst rauscharmen Zwischenfrequenzsignal umsetzen, um eine hohe Genauigkeit und große Reichweite zu erreichen. Dabei ist davon auszugehen, dass es mehrere Ausbreitungspfade zwischen Sender und Empfänger gibt. Prinzipiell ist es möglich, die empfangenen Mehrpfadausbreitungen und korrelierten Rauschanteile durch Bandpassfilterung mit einem, exakt auf die zu erwartende Frequenz, abgestimmten Filter zu unterdrücken. In der Praxis ist dieses Verfahren jedoch schlecht durchführbar, da Synchronisationsfehler der Abtastzeitpunkte und der Lokaloszillatorfrequenzen in den jeweiligen NKSEs eine genaue Vorhersage der, nach dem Mischvorgang generierten, Beatsignale nur in beschränktem Rahmen zulässt. Aufgrund dieser Probleme wird die Korrelation des Phasenrauschens dieser beiden Signale reduziert und der Schätzfehler der Phase nimmt zu.

Vorteilhaft sind daher Verfahren mit Berechnungsschritten, in denen die Einflüsse von Phasenrauschen und Synchronisationsfehlern reduziert oder komplett unterdrückt werden.

Das erfindungsgemäße Verfahren beginnt damit, dass zumindest zwei NKSE nahezu gleichzeitig senden. Nahezu gleichzeitig bedeutet in diesem Zusammenhang, dass die Sendesignale sigTX1 und sigTX2 zumindest für einen großen Teil ihrer Signaldauer in beide Richtungen, also sigTX1 von n1 nach NKSE2 und sigTX2 von NKSE2 nach NKSE1 übertragen werden. Der zunächst unbekannte Unterschied der Startzeitpunkte der Sendesignale sigTX1 und sigTX2 ist als T_off bezeichnet. Anzustreben sind möglichst gleiche Sendezeitpunkte, die Verschiebung T_off sollte vorzugsweise nicht größer als die Hälfte der Signaldauer, in jedem Fall jedoch kleiner als die Signaldauer sein. Dabei weisen auf Grund der zumindest teilweise eigenständigen Erzeugung die Signale sigTX1 und sigTX2 nichtkorrelierte Signalanteile auf, die auf das Phasenrauschen der Signalquellen in den Stationen NKSE1 und NKSE2 zurückzuführen sind.

In einer solchen Anordnung werden vorzugsweise dieselben Antennen zum Senden (Tx) und zum Empfangen (Rx) verwendet, um die Reziprozität der Übertragungskanäle sicherzustellen. Bei Anordnungen in einem Array ist (z.B. bei MIMO) sicherstellen, dass vorzugsweise zumindest einer der Übertragungswege reziprok ist. Besonders geeignet zum Erreichen der Reziprozität ist die Verwendung eines Transmissionsmischers in zumindest einem Sende- und Empfangspfad der NKSE. Eine beispielhafte Realisierungsform eines Transmissionsmischers in einer Radaranordnung wird zum Beispiel in US 6,317,075 B1 ausgeführt.

Als weiterer Schritt werden dann in jeder NKSE die Vergleichssignale (sigC21; sigC12) gebildet und zwar zwischen dem jeweils empfangenen Signal und dem Sendesignal oder mit einem mit dem Sendesignal bzgl. des Phasenrauschens korrelierten Anteil des Sendesignals. Das Verfahren zur Bildung dieser Vergleichssignale entspricht dem Vorgehen in Patentanmeldung DE 10 2014 104 273 A1.

Erfindungsgemäß werden dann Phasenrauschen und Synchronisationsfehler zumindest reduziert, in dem die Verarbeitung der empfangenen Signale in zwei Stufen durchgeführt wird: Als erster Schritt werden systematische Abweichungen korrigiert, entweder vor dem Empfang der Signale über eine Ansteuerung der Signalquelle, und/oder über eine Kompensation der direkt im empfangenen Signal und/oder über eine Kompensation im Vergleichssignal. Als zweiter Schritt erfolgt dann beispielsweise eine verkürzte Auswertung der Korrelation bzw. die Bildung eines Vergleichs-Vergleichssignales nur für den erwarteten Verschiebungsbereich oder im besten Falle in nur einem Verschiebungswert.

Besonders vorteilhaft ist im zweiten Schritt, erfindungsgemäß anders als in DE 10 2014 104 273 A1, ausgeführt, keine Multiplikation zur Phasenkompensation, sondern eine Addition der komplexen Signale zu verwenden. Die Verwendung der Addition anstatt der Multiplikation wird durch den zuvor beschriebenen ersten Schritt der Verarbeitung, also durch die vorherige Kompensation der systematischen Abweichungen möglich.

Ein Multiplikation oder Division der Signale stellt eine nichtlineare Operation dar. Nichtlineare Operationen gehen stets mit nichtlinearen Effekten, also hier insbesondere mit sogenannten Intermodulationen von Signal- und Rauschanteilen, einher. Dies führt insbesondere bei Radarsignalen mit mehreren Signalkomponenten, d.h. bei Signalen, die mehrere Ziele oder mehrere Signalübertragungspfade umfassen, zu Störungen. Die erfindungsgemäß vorgeschlagene Verwendung der Addition der komplexen Signale hat den großen Vorteil, dass die Addition eine lineare Operation ist, wodurch nichtlineare Effekte, also insbesondere Intermodulationen von Signal- und Rauschanteilen, vermieden werden. Diese Ausführungsvariante führt also in der Regel zu einer deutlich besseren Reduzierung des Phasenrauschens im Vergleich zu Verfahren zur Kombination der Vergleichssignale sigC21 und sigC12.

Dadurch wird erfindungsgemäß das Phasenrauschen/der Einfluss des Phasenrauschens unterdrückt, ohne dass die vorher genannten zusätzlichen Störeinflüsse entstehen wie sie bei DE 10 2014 104 273 A1 zu erwarten wären. Zudem ist dieser Ansatz technisch vorteilhaft, da er einen deutlich geringeren Rechenaufwand als die als Ausführungsform in DE 10 2014 104 273 A1 vorgeschlagene komplette Multiplikation oder Korrelation benötigt.

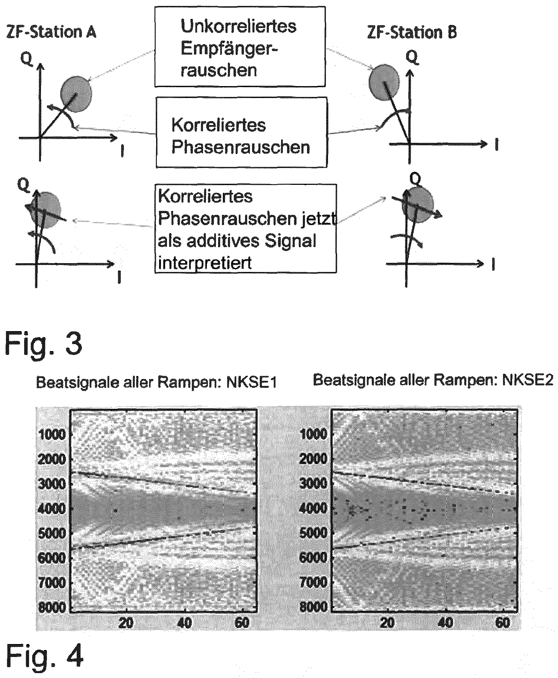

Um den erfindungsgemäßen Vorgang durchführen zu können, wird vorzugsweise zunächst eine präzise, entweder direkte (per steuerbarer Hardware) und/oder synthetische (rechnerische) Synchronisation durchgeführt, um den Frequenzversatz (möglichst weitgehend) zu kompensieren. Dann kann eine linearisierte Betrachtung verwendet werden, die nur bei geringen, residualen Phasenunterschieden eine Aufhebung des korrelierten Anteils der Störung bewirkt (Prinzip dargestellt in Fig. 3).

Die Synchronisation kann dabei vor der Messung separat durchgeführt werden, im Rahmen der Messung selber, oder im Anschluss an die Messung. Bei einer Synchronisation im Rahmen der Messung oder im Anschluss daran kann die Synchronisation beispielsweise über nachträgliches Anpassen des Vergleichssignals erfolgen.

Zur Synchronisation können Mittel oder Verfahren vorgesehen werden, die dazu geeignet sind, die Taktraten der Quellen von sigTX1 und sigTX2 entweder direkt (z. B. mittels TCXO) oder rechnerisch (synthetische Synchronisation) aneinander anzupassen.

Es können alle bekannten Verfahren zum Angleichen von Taktquellen in verteilten Stationen verwendet werden. Besonders vorteilhafte Ansätze zur Synchronisation sind Verfahren nach Patent US 7,940,743, nach Patentanmeldung DE102008010536, bzw. der Austausch von Referenztakten bzw. Referenzsignalen. Ein weiteres Verfahren zum Taktangleich innerhalb der Messungen für FMCW Signale wird weiter unten beschrieben.

Alle diese Verfahren zum Angleichen der Taktquellen können entweder über Funkwellen oder über Kabelverbindungen umgesetzt werden. Kabelgebunden kann elektrische Signale oder optische Signale, die von Kabeln geführt werden, bedeuten.

Alternativ oder zur Verbesserung zu den Verfahren zum Angleichen von Taktquellen können auch sehr hochwertige Taktquellen, beispielsweise Atomuhren, verwendet werden.

Nach dem Schritt der Synchronisation werden aus den Vergleichssignalen Signale (sigEP21, sigEP12) ableitet, die jeweils eine Funktion darstellen, die als Funktionsargument die Signallaufzeit bzw. die Länge des Übertragungskanals der jeweiligen Signalkomponenten aufweist.

Der Offset T_off zwischen den Stationen wird dann beispielsweise durch die in Patent DE 101 57 931 offenbarten Verfahren bestimmt, oder durch eine Korrelation der Vergleichssignale der mindestens zwei NKSE. Dabei kann das Maximum den Offset liefern. Alternativ kann auch das weiter unten für FMCW Signale beschriebene Verfahren zum Einsatz kommen. Wie zuvor können die Verfahren kabelgebunden oder mittels Funkwellen durchgeführt werden.

Aus dem Signal sigEP21 ist zumindest ein Funktionswert F1 bestimmbar, der einer bestimmten Laufzeit zuzuordnen ist und zumindest ein weiterer Funktionswert F2 des Signals sigEP12, der möglichst exakt derselben Laufzeit zuzuordnen ist. F1 mit F2 werden dann miteinander verrechnet. Diese Verrechnung erfolgt beispielsweise durch eine Addition oder Differenzbildung der beiden Laufzeitwerte.

Damit sind Störungen, die durch die nichtkorrelierten Signalanteile der Signale sigTX1 und sigTX2, die auf das Phasenrauschen der Signalquellen zurückzuführen sind, eliminiert bzw. zumindest reduziert werden.

Die Schritte werden im Folgenden zusammengefasst:

Verfahren zur Verringerung von Störungen durch Phasenrauschen in einem Radarsystem, bei dem

- in einer ersten nicht-kohärenten Sende-Empfangseinheit (NKSE1) ein erstes Signal (sigTX1) erzeugt und über einen Pfad (SP) gesendet, insbesondere ausgestrahlt wird,

- in einer weiteren, insbesondere zweiten nicht-kohärenten Sende-Empfangseinheit (NKSE2) ein (weiteres) erstes Signal (sigTX2) erzeugt und über den Pfad (SP) gesendet, insbesondere ausgestrahlt wird,

- die Signale (sigTX1 und sigTX2) in der jeweils anderen Sende-Empfangseinheit auf direktem oder indirektem Weg empfangen werden und dort als Empfangssignale sigRX12 und sigRX21 weiterverarbeitet werden,

EP 3 400 458 B1

- in der ersten Sende-Empfangseinheit (NKSE1) ein Vergleichssignal (sigC12) aus deren erstem Signal (sigTX1) und aus einem solchen von der weiteren Sende-Empfangseinheit (NKSE2) über den Pfad (SP) empfangenen ersten Signal (sigRTX2) gebildet wird und

- in der weiteren Sende-Empfangseinheit (NKSE2) ein weiteres Vergleichssignal (sigC21) aus deren erstem Signal (sigTX2) und aus einem solchen von der ersten Sende-Empfangseinheit (NKSE1) über den Pfad (SP) empfangenen ersten Signal (sigTX1) gebildet wird,

- wobei das weitere Vergleichssignal (sigC21) von der weiteren Sende-Empfangseinheit (NKSE2) zu der ersten Sende-Empfangseinheit (NKSE1) übertragen, insbesondere kommuniziert wird,

- wobei in einem ersten Schritt Abweichungen der Signale sigC21 und sigC12, die durch systematische Abweichungen in den Sende-Empfangseinheiten (NKSE2, NKSE1) hervorgerufen werden, kompensiert werden,

- wobei in einem zweiten Schritt zumindest ein komplexer Wert aus einem ersten der beiden Vergleichssignale oder aus einem Signal, das aus diesem ersten Vergleichssignal abgeleitet wurde, dazu verwendet wird zumindest einen komplexen Wert des zweiten der beiden Vergleichssignale oder einen Wert eines Signals, das aus diesem zweiten Vergleichssignal abgeleitet wurde, anzupassen und so ein (angepasstes) Signal (sigCC) zu bilden,

- wobei die Anpassung derart geschieht, dass durch eine mathematische Operation die vektorielle Summe oder die Differenz der komplexen Werte gebildet wird.

Unter einer nicht-kohärenteren Sende- und Empfangseinheit (NKSE) ist eine Sende- und Empfangseinheit zu verstehen, deren gesendetes Signal in Bezug auf das Signal einer weiteren NKSE nicht-kohärent ist (auch wenn das Signal der der ersten NKSE bzw. der weitern NKSE in sich kohärent ist). Soweit in der (jeweiligen) Sende-Empfangseinheit Berechnungen, Auswertungen oder sonstige Verfahrensschritte durchgeführt werden, fällt darunter auch eine ggfs. körperlich eigenständige Auswerteeinrichtung, welche an der Sende-Empfangseinheit angeschlossen ist. Beispielsweise kann die Sende-Empfangseinheit so als eine Anordnung aus insbesondere einer oder mehreren Antennen mit einigen wenigen signalerzeugenden oder signalverarbeitenden Komponenten ausgebildet sein, während weitere Komponenten wie die Signalvergleichseinheiten oder eine Auswerteeinrichtung als konstruktiv eigenständige Komponenten an eine solche Anordnung angeschlossen sind. Soweit Komponenten eingesetzt werden können diese, soweit technisch realisierbar, als sogenannte Hardware aus verarbeitenden Komponenten ausgebildet sein und/oder als ganz oder teilweise in einem Prozessor ausgeführte Signal bzw. Datenverarbeitungsschritte umgesetzt werden.

Im Allgemeinen ist die ggf. vorgesehene Auswerteeinrichtung insbesondere Bestandteil einer oder mehrerer (beider) Sende-Empfangseinheiten oder an einer oder mehreren (beider) solcher Sende-Empfangseinheiten angeschlossen. Ggf. kann eine körperlich eigenständige Auswerteeinrichtung vorgesehen sein, die an die jeweilige Sende-Empfangseinheit bzw. die übrigen Komponenten der jeweiligen Sende-Empfangseinheit angeschlossen ist. Alternativ kann die Auswerteeinrichtung ggf. in die erste und/oder die weitere nicht-kohärente Sende-Empfangseinheit, beispielsweise in einem gemeinsamen Gehäuse und/oder als Baueinheit, integriert sein.

Ein Ausführungsbeispiel wird nachfolgend anhand der Figuren näher erläutert.

Es zeigen:

Fig. 1    zwei miteinander kommunizierende Sende-Empfangseinheiten und einzelne derer Komponenten;

Fig. 2    die Komponenten aus Fig. 1 mit Veranschaulichung eines Verfahrensablaufs;

Fig. 3    oben Beatsignale der beiden Sende-Empfangseinheiten mit nichtkorrelierten Rauschanteilen vor der Synchronisation und unten ein synthetisches Mischprodukt mit korreliertem Phasenrauschen nach der Synchronisation;

Fig. 4    Spektrogramme aller Rampen von der beiden Sende-Empfangseinheiten vor der Synchronisation.

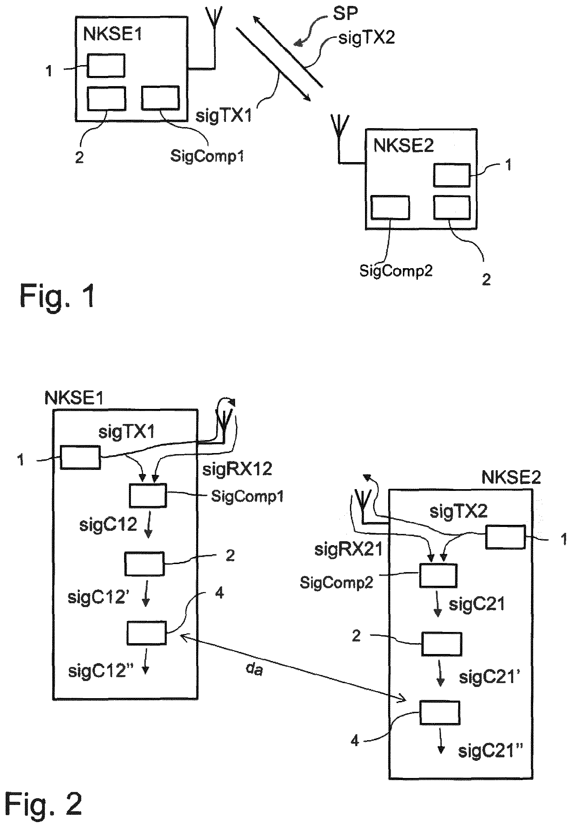

Wie aus Fig. 1 ersichtlich, kommunizieren zwei Sende-Empfangseinheiten NKSE1, NKSE2 über eine Funk-Schnittstelle miteinander. Dabei werden ein erstes bzw. ein zweites Signal sigTX1, sigTX2 gesendet. Die Sende-Empfangseinheiten NKSE1, NKSE2 weisen jeweils eine Signalquelle 1, eine Einheit zur Taktanpassung oder Vergleichssignalmodifikation 2 und eine Sendevergleichseinheit (SigComp1, SigComp2) auf.

Fig. 2 zeigt zusätzlich jeweils eine Einheit zur Phasenmodifikation 4. Zwischen den beiden Einheiten zur Phasenmodifikation 4 erfolgt ein Datenaustausch.

Im Folgenden wird die exakte mathematische Herleitung der Erfindung durchgeführt. In einer ersten nicht-

5

kohärenten Sende-Empfangseinheit (NKSE1) wird ein erstes Signal (sigTX1) erzeugt und über einen Pfad (SP) gesendet, insbesondere ausgestrahlt. In einer weiteren, insbesondere zweiten nicht-kohärenten Sende-Empfangseinheit (NKSE2) wird ein zweites Signal (sigTX2) erzeugt und über den Pfad (SP) gesendet, insbesondere ausgestrahlt. Die Abstrahlung der Signale erfolgt hierbei möglichst gleichzeitig zumindest aber zeitlich so aufeinander abgestimmt, dass sich die beiden Signalformen vorzugsweise mindestens die Hälfte der Sendezeit überlappen. Die Signalquellen können komplett oder teilweise unabhängig sein.

Wie in der Nachrichtentechnik üblich, können die verwendeten Sendesignale (sigTX1, sigTX2) als eine Zerlegung in ein äquivalentes Basisbandsignal (bbTX1) und ein Trägersignal dargestellt werden.

Da das erfindungsgemäße System vorzugsweise zur Entfernungsmessung bzw. zur Abbildung verwendet werden soll, werden als Basisbandsignale vorzugsweise Signale mit sogenannten guten Korrelationseigenschaften verwendeten. Signale mit guten Korrelationseigenschaften sind beispielsweise breitbandige Pulse, Rauschsignale, pseudo-zufällige Pulsfolgen (PN Codes) wie etwa M-Sequenzen, Gold-Codes oder Barker Codes, Kasami Sequenzen, Huffman Sequenzen, Chirps, linear frequenzmodulierte Signale (FMCW), Chirp- oder FMCW-Sequenzen usw.. Derartige Signalformen sind in der Radartechnik und der Kommunikationstechnik (insbes. im Bereich CDMA) seit langem und vielfältig bekannt.

Das Sendesignal (sigTX1) der Sende-Empfangseinheit (NKSE1) kann wie folgt dargestellt werden:

$$sigTX1(t) = \text{Re}\left\{ bbTX1\left(t - T_{01}\right) \cdot e^{j\left(\omega_{c1}\left(t - T_{01}\right) + \phi TX1\left(t - T_{01}\right)\right)} \right\}$$

Der Zeitoffset T01 definiert den Sendezeitpunkt des Signals sigTX1; der Phasenterm $\phi TX1\,(t) = \varphi TX1 + \xi TX1\,(t)$ umfasst einen konstanten Phasenoffset und das Phasenrauschen des Trägersignals.

Die Kreisfrequenz $\omega_{c1}$ charakterisiert die Frequenz des Trägersignals von sigTX1.

In gleicher Art und Weise kann das Sendesignal (sigTX2) der Sende-Empfangseinheit (NKSE2) gebildet werden. Es gilt:

$$sigTX2(t) = \text{Re}\left\{ bbTX2\left(t - T_{02}\right) \cdot e^{j\left(\omega_{c2}\left(t - T_{02}\right) + \phi TX2\left(t - T_{02}\right)\right)} \right\}$$

Die gesendeten Signale (sigTX1 und sigTX2) gelangen - auf direktem Weg oder an Objekten reflektiert - zur jeweils anderen Sende-Empfangsstation und werden dort empfangen und als Empfangssignale sigRX12 und sigRX21 weiterverarbeitet.

Das Empfangssignal, das an der zweiten nicht-kohärenten Sende-Empfangseinheit (NKSE2) empfangen wird, entspricht dem Sendesignal (sigTX1), wobei dieses jedoch in der Amplitude geändert und um die Laufzeit $\tau_{21}$ verzögert ist. Zur Vereinfachung der mathematischen Darstellung und ohne Beschränkung der allgemeinen Offenbarung sollen alle Signale im Folgenden als komplexwertige Signale dargestellt werden. Es gilt somit:

$$sigRX21(t) = ARX21 \cdot bbTX1\left(t - T_{01} - \tau_{21}\right) \cdot e^{j\left(\omega_{c1}\left(t - T_{01} - \tau_{21}\right) + \phi TX1\left(t - T_{01} - \tau_{21}\right)\right)}$$

Wird das Sendesignal (sigTX1) auf mehreren (eine Anzahl von I) unterschiedlich langen Übertragungswegen zur zweiten Sende-Empfangseinheit (NKSE2) übertragen, so kann das Empfangssignal als eine lineare Superposition von amplitudengewichteten und zeitverzögerten Signalen wie folgt dargestellt werden:

$$sigRX21(t) = \sum_{i=1}^{I} sigRX21i(t)$$

mit

6

$$sigRX21i(t) = ARX21i \cdot bbTX1(t - T_{01} - \tau_{21i}) \cdot e^{j(\omega_{c1}(t-T_{01}-\tau_{21i})+\phi TX1(t-T_{01}-\tau_{21i}))}$$

Für das von der zweiten Sende-Empfangseinheit (NKSE2) zur ersten Sende-Empfangseinheit (NKSE1) übertragene Signal gilt entsprechend

$$sigRX12(t) = ARX12 \cdot bbTX2(t - T_{02} - \tau_{12}) \cdot e^{j(\omega_{c2}(t-T_{02}-\tau_{12})+\phi TX2(t-T_{02}-\tau_{12}))}$$

bzw.

$$sigRX12(t) = \sum_{i=1}^{I} sigRX12i(t)$$

mit

$$sigRX12i(t) = ARX12i \cdot bbTX2(t - T_{02} - \tau_{12i}) \cdot e^{j(\omega_{c2}(t-T_{02}-\tau_{12i})+\phi TX2(t-T_{02}-\tau_{12i}))}$$

Die Sende-Empfangseinheiten (NKSE1, NKSE2) seien so ausgeführt, dass sie Signalvergleichseinheiten SigComp1, SigComp2 umfassen, in denen das jeweilige Empfangssignal einer Sende-Empfangseinheiten mit ihrem Sendesignal verrechnet wird - d.h. in NKSE1 das Signal sigRX12 mit dem Signal sigTX1 und in NKSE2 das Signal sigRX21 mit dem Signal sigTX2. Die Signalvergleichseinheiten SigComp1, SigComp2 sind im Ausführungsbeispiel als Mischer Mix ausgeführt. D.h. hier wird in NKSE1 das Signal sigRX12 mit dem Signal sigTX1 gemischt und in NKSE2 das Signal sigRX21 mit dem Signal sigTX2. Es ist als solches allgemein bekannt, dass ein Mischvorgang systemtheoretisch als Multiplikation ausgedrückt werden kann bzw. ein Heruntermischen bei zwei komplexen Sinussignalen als Multiplikation eines der Signale mit dem konjugiert komplexen (* = Zeichen für Konjugation) des anderen Signals. Es gilt daher:

$$sigC12 = sigRX12^* \cdot sigTX1$$
$$= ARX12 \cdot bbTX2^*(t - T_{02} - \tau_{12}) \cdot e^{-j(\omega_{c2}(t-T_{02}-\tau_{12})+\phi TX2(t-T_{02}-\tau_{12}))} \cdot bbTX1(t - T_{01}) \cdot e^{j(\omega_{c1}(t-T_{01})+\phi TX1(t-T_{01}))}$$
$$= ARX12 \cdot bbTX2^*(t - T_{02} - \tau_{12}) \cdot bbTX1(t - T_{01}) \cdot e^{j(\omega_{c1}(t-T_{01})+\phi TX1(t-T_{01})-\omega_{c2}(t-T_{02}-\tau_{12})-\phi TX2(t-T_{02}-\tau_{12}))}$$

Eine andere vorteilhafte Art ein Vergleichssignal zu bilden besteht darin, dass NKSE1 das Signal sigRX12 nicht mit dem Signal sigTX1 mischt sondern nur mit dessen Träger. Also:

$$sigC12 = sigRX12^* \cdot e^{j(\omega_{c1}(t-T_{01})+\phi TX1(t-T_{01}))}$$
$$= ARX12 \cdot bbTX2^*(t - T_{02} - \tau_{12}) \cdot e^{j(\omega_{c1}(t-T_{01})+\phi TX1(t-T_{01})-\omega_{c2}(t-T_{02}-\tau_{12})-\phi TX2(t-T_{02}-\tau_{12}))}$$

Für die Signale in der NKSE2 gilt entsprechend:

$$sigC21 = sigRX21^* \cdot sigTX2$$
$$= ARX21 \cdot bbTX1^*(t - T_{01} - \tau_{21}) \cdot e^{-j(\omega_{c1}(t-T_{01}-\tau_{21})+\phi TX1(t-T_{01}-\tau_{21}))} \cdot bbTX2(t - T_{02}) \cdot e^{j(\omega_{c2}(t-T_{02})+\phi TX2(t-T_{02}))}$$
$$= ARX21 \cdot bbTX1^*(t - T_{01} - \tau_{21}) \cdot bbTX2(t - T_{02}) \cdot e^{j(\omega_{c2}(t-T_{02})+\phi TX2(t-T_{02})-\omega_{c1}(t-T_{01}-\tau_{21})-\phi TX1(t-T_{01}-\tau_{21}))}$$

Oder in der alternativen Ausführungsform:

$$sigC21 = sigRX21^* \cdot e^{j\left(\omega_{c2}\left(t-T_{02}\right)+\phi TX2\left(t-T_{02}\right)\right)}$$
$$= ARX21 \cdot bbTX1^*\left(t-T_{01}-\tau_{21}\right) \cdot e^{j\left(\omega_{c2}\left(t-T_{02}\right)+\phi TX2\left(t-T_{02}\right)-\omega_{c1}\left(t-T_{01}-\tau_{21}\right)-\phi TX1\left(t-T_{01}-\tau_{21}\right)\right)}$$

Es wird nun davon ausgegangen, dass in NKSE Mittel vorgesehen sind, die dafür sorgen, dass die folgenden Bedingungen erfüllt sind:

$$T_{01} = T_{02} = T_0 \quad \text{und} \quad \omega_{c2} = \omega_{c1} = \omega_c$$

Wie diese Mittel vorzugsweise ausgestaltet sein können, wurde bereits oben erläutert bzw. wird weiter unten in einem Ausführungsbeispiel noch ausgeführt. Unter diesen Randbedingungen ergibt sich:

$$sigC12 = ARX12 \cdot bbTX2^*\left(t-T_0-\tau_{12}\right) \cdot bbTX1\left(t-T_0\right) \cdot e^{j\left(\omega_c\left(t-T_0\right)+\phi TX1\left(t-T_0\right)-\omega_c\left(t-T_0-\tau_{12}\right)-\phi TX2\left(t-T_0-\tau_{12}\right)\right)}$$
$$= ARX12 \cdot bbTX2^*\left(t-T_0-\tau_{12}\right) \cdot bbTX1\left(t-T_0\right) \cdot e^{j\left(\omega_c\tau_{12}+\phi TX1\left(t-T_0\right)-\phi TX2\left(t-T_0-\tau_{12}\right)\right)}$$

$$sigC21 = ARX21 \cdot bbTX1^*\left(t-T_0-\tau_{21}\right) \cdot bbTX2\left(t-T_0\right) \cdot e^{j\left(\omega_c\left(t-T_0\right)+\phi TX2\left(t-T_0\right)-\omega_c\left(t-T_0-\tau_{21}\right)-\phi TX1\left(t-T_0-\tau_{21}\right)\right)}$$
$$= ARX21 \cdot bbTX1^*\left(t-T_0-\tau_{21}\right) \cdot bbTX2\left(t-T_0\right) \cdot e^{j\left(\omega_c\tau_{21}+\phi TX2\left(t-T_0\right)-\phi TX1\left(t-T_0-\tau_{21}\right)\right)}$$

Geht man von einem reziprokem Übertragungskanal aus so gilt ferner: $\tau_{21} = \tau_{12} = \tau$ Im nächsten Schritt wird mit einer Datenkommunikation dafür gesorgt, dass beide Vergleichssignale zu einer gemeinsamen Auswerteinheit übertragen werden und dort zur Auswertung beide vorliegen. Die gemeinsame Auswerteinheit kann NKSE1, NKSE2 oder eine andere Auswerteinheit sein.

Nun werden in einem nicht erfindungsgemäßen weiteren Verarbeitungsschritt die Phasen der beiden Vergleichssignale addiert. Betrachtet man hier nur die Trägerphasen mit dem Phasenrauschanteil, da nur in diesem Anteil unbekannte Phasenbeiträge vorhanden sind und addiert man die beiden Trägerphasenterme so ergibt sich:

$$\Delta\phi = \left(\omega_c\tau + \phi TX1\left(t-T_0\right) - \phi TX2\left(t-T_0-\tau\right)\right) + \left(\omega_c\tau_{21} + \phi TX2\left(t-T_0\right) - \phi TX1\left(t-T_0-\tau_{21}\right)\right)$$
$$= 2\omega_c\tau + \phi TX1\left(t-T_0\right) - \phi TX1\left(t-T_0-\tau\right) + \phi TX2\left(t-T_0\right) - \phi TX2\left(t-T_0-\tau\right)$$

Berücksichtigt man, dass die Laufzeit $\tau$ wegen der großen Ausbreitungsgeschwindigkeit von elektromagnetischen Wellen in der Regel sehr klein ist und dass die maßgeblichen Phasenrauschanteile bei einem Oszillator entsprechend der bekannten Zusammenhänge von Oszillator-Phasenrauschen typischerweise mit zunehmenden Abstand vom Träger stark abnehmen und $\phi TX1$ bzw. $\phi TX2$ demzufolge ein ausgeprägtes Tiefpass-Verhalten aufweisen und zwar ein Tiefpassverhalten mit einer Grenzfrequenz, die üblicherweise deutlich kleiner als $1/\tau$ ist, so folgt:

$$\delta\phi1(t) = \phi TX1\left(t-T_0\right) - \phi TX1\left(t-T_0-\tau\right) \quad \text{mit} \quad \delta\phi1(t) << \phi TX1(t)$$

$$\delta\phi2 = \phi TX2\left(t-T_0\right) - \phi TX2\left(t-T_0-\tau\right) \quad \text{mit} \quad \delta\phi2(t) << \phi TX2(t)$$

Die Verarbeitung, dass bei einem der Vergleichssignale die Phase des jeweils anderen Vergleichssignals aufaddiert wird, führt also dazu, dass die Störungen durch Phasenrauschen ganz erheblich reduziert werden. Diese Phasenrauschreduktion führt zu einer besseren Detektierbarkeit von Zielen, zu einer größerer Messreichweite und einer verbesserten Messgenauigkeit.

Abhängig von der gewählten Mischer-Topologie, ob z.B. ein Gleichlage- oder ein Kehrlage-Mischer verwendet wird, ist es möglich, dass die oben dargestellten Phasenterme andere Vorzeichen aufweisen. Je nach Vorzeichen ist die bevorzugte Verknüpfung der Phasenterme nicht zwangsläufig eine Addition sondern ggf. auch eine Subtraktion. Entscheidend ist, dass die Verknüpfung zu einer Reduktion der Phasenrauschterme führt und der laufzeitabhängige Phasenterm, d.h. ein Ausdruck der den Term $\omega_c \tau$ umfasst, erhalten bleibt. Es ist ferner allgemein bekannt, dass für den Fall, dass die Phasenwerte durch komplexe Zahlen repräsentiert werden, die komplexen Zahlen miteinander multipliziert, dividiert oder mit dem konjugiert komplexen der jeweils anderen Zahl multipliziert werden, um die Summe oder die Differenz der Phasen zu bilden.

Eine erfindungsgemäße bevorzugte Variante zur Reduktion der Phasenrauschanteile soll im Folgenden beschrieben werden. In vielen Fällen ist es günstig, dass in der ersten und zweiten nicht-kohärenten Sende-Empfangseinheit (NKSE1, NKSE1) gleichartige Basisbandsignale erzeugt werden, also dass gilt:

$$bbTX1 = bbTX2 = bbTX.$$

In einem zumindest näherungsweise reziprokem Funkkanal ist ferner davon auszugehen, dass gilt:

$$ARX12 = ARX21 = ARX$$

Unter diesen Randbedingungen ergibt sich:

$$sigC12 = ARX \cdot bbTX^{*}\left(t - T_0 - \tau_{12}\right) \cdot bbTX\left(t - T_0\right) \cdot e^{j\left(\omega_c \tau + \phi TX1\left(t - T_0\right) - \phi TX2\left(t - T_0 - \tau\right)\right)}$$

$$sigC21 = ARX \cdot bbTX^{*}\left(t - T_0 - \tau_{21}\right) \cdot bbTX\left(t - T_0\right) \cdot e^{j\left(\omega_c \tau + \phi TX2\left(t - T_0\right) - \phi TX1\left(t - T_0 - \tau\right)\right)}$$

Wie leicht zu erkennen ist, sind die beiden Signale bis auf ihre Phasenterme identisch.

Leicht unterschiedliche Amplituden der Signale sigC12 und sigC21 können allerdings trotz eines reziproken Funkkanals aufgrund von unterschiedlichen Eigenschaften der elektronischen Komponenten wie etwa von Mischern oder Verstärkern etc. auftreten. Sofern die Amplituden der Signale sigC12 und sigC21 unterschiedlich sind, müssen die Signale bei der hier beschriebenen erfindungsgemäßen Variante zunächst auf die gleiche Amplitude normiert werden.

Auch können bei dem Vorgang zur Bildung der Signale sigC12 und sigC21 zusätzliche systematische Phasenoffsets entstehen. Sofern diese Phasenoffsets der Signale sigC12 und sigC21 unterschiedlich sind, müssen diese Phasenoffsets bei der hier beschriebenen erfindungsgemäßen Variante zunächst kompensiert werden.

Für einen bestimmten Zeitpunkt t, können die Signale sigC12 und sigC21 als komplexe Zeiger aufgefasst werden. Durch eine komplexe Addition der Zeiger heben sich die Vektorkomponenten der Phasenterme mit unterschiedlichem Vorzeichen in der gleichen Art und Weise auf, wie sie oben bei der Addition der Phasenterme beschrieben wurde. Folglich wird als eine mögliche bevorzugte Variante zur Reduktion der Phasenrauschanteile vorgeschlagen, die komplexen Signale sigC12 und sigC21 zu addieren, also ein Signal wie folgt zu bilden:

$$sigCC = sigC12 + sigC21$$

Das Signal sigCC weist dann ein signifikant geringeres Phasenrauschen auf als das Signal sigC12 bzw. sigC21 und das Signal sigCC wird dann weiter zum Zweck der Entfernungsmessung, Winkelmessung oder zur Bildgebung verwendet. Wichtig ist aber, dass vor der Addition der Signale die zuvor beschriebenen systematischen Abweichungen von Amplitude und Phasen, die unterschiedliche Trägerfrequenzen und Sendezeitpunkte verursachen, kompensiert wurden.

Es müssen natürlich nicht alle Werte von sigC12 und sigC21 und auch nicht unbedingt die Signale sigC12 und sigC21 selber addiert werden. Es soll aber zumindest ein komplexer Wert aus einem ersten der beiden Vergleichssignale oder aus einem Signal, das aus diesem ersten Vergleichssignal abgeleitet wurde, dazu verwendet werden, zumindest einen komplexen Wert des zweiten der beiden Vergleichssignale oder einen Wert eines Signals, das aus diesem zweiten Vergleichssignal abgeleitet wurde, anzupassen und so zumindest einen Wert eines Signals (sigCC) zu bilden, wobei die Anpassung derart geschieht, dass durch eine mathematische Operation die vektorielle Summe oder die Differenz von zumindest zwei aus sigC12 und sigC21 abgeleiteten komplexen Werten gebildet wird oder die Summe oder die Differenz der Phasen dieser komplexen Werte gebildet wird.

Es sei hier darauf hingewiesen, dass die vorgeschlagenen Mischvorgänge nur eine mögliche Ausgestaltung darstellen und dass die Kompensation der Phasenrauschanteile auch durch alternative Methoden realisiert werden könnte. So könnten etwa alle Hochfrequenzsignale schon vor dem Mischen digitalisiert, d.h. mit einen Analog-zu-Digital-Konverter abgetastet, werden und alle weiteren Operation könnten rechnerisch bzw. digital zum Beispiel in einem Prozessor oder FPGA (field-programmable gate array) erfolgen.

Grundsätzlich können die gesendeten Signale sigTX1 und SigTX2 FMCW moduliert sein. Vorzugsweise werden dabei (vor der mathematischen Operation) die Spektren der Vergleichssignale auf den höchsten Wert normalisiert werden.

Im Folgenden wird eine spezielle Ausgestaltung der Erfindung mit FMCW Signalen und mehreren, aufeinanderfolgende N Rampen beschrieben. Dabei senden die NKSE mehrere N Signale mit linear ansteigender oder abfallender Frequenz, im Folgenden als Frequenzrampen bezeichnet. Aus den empfangenen Signalen werden dann in den NKSE die Vergleichssignale erzeugt und zur weiteren Verarbeitung zwischengespeichert. Es werden beispielhaft steigende und fallende Rampen verwendet, da hiermit eine vorzeichenrichtige Bestimmung der Relativgeschwindigkeit gelingt.

Zunächst werden einzelne Spektrogramme der Beatsignale sigC12 und sigC21 für jeden Empfangskanal für jede Rampe erstellt. Diese Spektrogramme werden in Amplitudendarstellung ohne Phaseninformation für alle N aufeinander folgenden Rampen nebeneinander gestellt. Dies ist in Fig. 4 für die steigenden Rampen dargestellt, in welcher zwei Maxima erscheinen, da keine IQ Mischung durchgeführt wurde, sondern ein reellwertiges Abtastsignal vorliegt. Bei Verwendung in Primärradaren muss für diesen Schritt vorab der mindestens eine Reflektor im Erfassungsbereich identifiziert werden und wie zuvor beschrieben dargestellt werden.

Nun wird das Frequenzband, in dem das Beatsignal zu erwarten ist (durch eine grobe Vorsynchronisation sichergestellt) großzügig ausgeschnitten. Danach wird jeweils das Spektrogramm der ersten N/2 Rampen mit dem der zweiten N/2 Rampen entlang der Frequenzachse korreliert (Schritt 1). Das dabei gefundene Maximum gibt den relativen Zeitdrift der beiden NKSEs wieder (hierbei kann von einer linearen Funktion ausgegangen werden). Bei Empfang der Signale über eine oder mehrere Reflektionen kann beispielhaft auch die Identifikation der Ziele über die gegensätzliche Drift auf beiden Seiten erfolgen.

Alternativ kann eine Bestimmung des Frequenzoffsets insbesondere bei Primärradaren auch über ein gemeinsames Busssystem erfolgen, indem die Systeme ihre Messsignale oder weitergehende Synchronisationssignale über die Kabel eines Bussystems austauschen. Das Bussystem ist dabei insbeondere ein CAN, FlexRay, Most, Gigabyte Ethernetsystem, USB, Firewire oder TTP system.

Danach werden alle Rampen im Spektrogramm um diesen Drift korrigiert, indem man beispielsweise mit einem komplexen Korrektursignal mit gegenläufigem Frequenzversatz in der Einheit zur Taktanpassung oder Vergleichssignalmodifikation 2 multipliziert. Die so erhaltenen Spektrogramme der verschiedenen Rampen werden (inkohärent) addiert und im Ergebnis der Überlagerung wird das Maximum gesucht, welches dem Zeitversatz (Offsetfehler) entspricht. Bei Primärradar kann für die Auswahl der Peaks die im vorherigen Schritt erfolgte Identifizierung der zueinander gehörenden Peaks verwendet werden.

Alternativ kann eine Bestimmung des Zeitoffsets auch über ein gemeinsames Bussystem erfolgen, insbesondere, indem entweder die Messdaten oder geeignete Korrelationssequenzen übertragen werden.

Die auf diese Weise ermittelten Parameter relativer Zeitversatz und relative Zeitdrift (=aktueller Frequenzversatz) sind über die komplette Sequenz von N Rampen gemittelt. Dieses Ergebnis enthält einen großen Teil der Uhrenabweichung. Zusätzlich ist nun für jede Rampe und jede Station bekannt, an welcher Stelle im Spektrogramm jeweils die Energie des einfallenden Signals zu erwarten ist.

Die ursprünglich aufgezeichneten lokalen Mischsignale sigC12 und sigC21 werden nun zunächst um ganzzahlige Werte Tint (Darstellung des Zeitversatzes zwischen den beiden Stationen als $\Delta T = |\ T01 - T02$

$| = Tint + Tfrac$ ) verschoben, um eine einheitliche Zeitbasis zu erhalten. Durch die gemeinsame genaue Zeitbasis ist das Phasenrauschen stärker korreliert. Der verbleibende, geringe Zeitfehler Tfrac kann nun, etwa durch Anwendung eines Fractional-Delay-Filters, kompensiert werden. Die so verschobenen Signale werden nun um die abweichende Rampensteilheit korrigiert, die aufgrund des Frequenzversatzes $\Delta\omega = \omega1 - \omega2$ der beiden Lokaloszillatoren entsteht, indem man mit einem normierten komplexen Korrektursignal faltet bzw. spektral multipliziert, was den Frequenzverlauf in die entgegengesetzte Richtung abbildet.

In diesen nachgeschärften Mischsignalen wird nun nach einer FFT des Beatsignals zur Kanalimpulsantwort jeweils ein Peak gesucht. Bei Sekundärradar nimmt man bevorzugt den stärksten Peak oder alternativ den ersten Peak, bei Primärradar muss man einen auf beiden Seiten gleichermaßen enthaltenen Peak wählen. Für jede Rampe an beiden Stationen ergibt sich so ein Maximum bei dem geschätzten Abstand mit der dazugehörenden Phasenlage. Diese Werte stimmen für die Messung auf dem Hin- und Rückweg bei einem reziproken Kanal prinzipiell überein. Die verbleibenden Abweichungen sind auf verbleibende Frequenz- und Phasenunterschiede zwischen beiden Signalquellen 1 der NKSE, beispielsweise der Oszillatoren, denen Phasenrauschen als Ursache zu Grunde liegt, zurückzuführen. Der genaue Frequenzunterschied kann nun absolut bestimmt und somit korrigiert werden (der Phasenunterschied kann bis auf 180°-Mehrdeutigkeit (bei IQ Mischern 360°) bestimmt werden). Diese Mehrdeutigkeit wird behoben durch eine Beschränkung des Phasenverlaufs auf +/- 90° von Rampe zu Rampe, was auch als Unwrapping bezeichnet wird. Nach dieser präzisen Korrektur des verbleibenden Phasenfehlers unterscheiden sich die synthetischen Mischsignale beider Stationen nun kaum noch.

Nach dieser Vorverarbeitung wurden die charakteristischen, systematischen Fehler des Radarsystems vollständig korrigiert, weswegen die Phasenverschiebung der beiden Beatsignale nur noch um einen kleinen Betrag abweicht. An dieser Stelle ist zum einen eine präzise Synchronisation der Zeit- und Frequenzbasis erreicht und zum anderen kann das Phasenrauschen als additiver Beitrag betrachtet und durch Linearkombination behoben werden. Dies geschieht beispielsweise mittels 2D Fouriertransformation aller N Rampen an beiden NKSEs, worauf schließlich die, in der Amplitude normierten Beatsignale addiert werden. Unter Einbezug der Systemparameter (Abtastrate, Rampensteilheit, Trägerfrequenz,...) stellt das Maximum des Ergebnisses dieser Linearkombination den Schätzwert für Abstand und Geschwindigkeit dar.

**Patentansprüche**

1.  Verfahren zur Verringerung von Störungen durch Phasenrauschen in einem Radarsystem, bei dem

    - in einer ersten nicht-kohärenten Sende-Empfangseinheit (NKSE1) ein erstes Signal (sigTX1) erzeugt und über einen Pfad (SP) gesendet, insbesondere ausgestrahlt wird,
    - in einer weiteren, insbesondere zweiten nicht-kohärenten Sende-Empfangseinheit (NKSE2) ein erstes Signal (sigTX2) erzeugt und über den Pfad (SP) gesendet, insbesondere ausgestrahlt wird,
    - die ersten Signale (sigTX1 und sigTX2) in der jeweils anderen Sende-Empfangseinheit auf direktem oder indirektem Weg empfangen werden und dort als Empfangssignale (sigRX12 und sigRX21) weiterverarbeitet werden,
    - in der ersten Sende-Empfangseinheit (NKSE1) ein Vergleichssignal (sigC12) aus deren erstem Signal (sigTX1) und aus einem solchen von der weiteren Sende-Empfangseinheit (NKSE2) über den Pfad (SP) empfangenen ersten Signal (sigRTX2) gebildet wird und
    - in der weiteren Sende-Empfangseinheit (NKSE2) ein weiteres Vergleichssignal (sigC21) aus deren erstem Signal (sigTX2) und aus einem solchen von der ersten Sende-Empfangseinheit (NKSE1) über den Pfad (SP) empfangenen ersten Signal (sigTX1) gebildet wird,
    - wobei das weitere Vergleichssignal (sigC21) von der weiteren Sende-Empfangseinheit (NKSE2) zu der ersten Sende-Empfangseinheit (NKSE1) übertragen, insbesondere kommuniziert wird,
    - wobei in einem ersten Schritt Abweichungen der Vergleichssignale (sigC21 und sigC12) die durch systematische Abweichungen in den Sende-Empfangseinheiten (NKSE2, NKSE1) hervorgerufen werden, kompensiert werden,
    - wobei in einem zweiten Schritt zumindest ein komplexer Wert aus einem ersten der beiden Vergleichssignale oder aus einem Signal, das aus diesem ersten Vergleichssignal abgeleitet wurde, dazu verwendet wird, zumindest einen komplexen Wert des zweiten der beiden Vergleichssignale oder einen Wert eines Signals, das aus diesem zweiten Vergleichssignal abgeleitet wurde, anzupassen und so ein angepasstes Signal (sigCC) zu bilden,
    - wobei die Anpassung derart geschieht, dass durch eine mathematische Operation die vektorielle Summe oder die Differenz der komplexen Werte gebildet wird.

2.  Verfahren nach Anspruch 1, wobei die ersten Signale (sigTX1 und SigTX2) FMCW moduliert sind.

3.  Verfahren nach Anspruch 1 oder 2, wobei ein Taktratenabgleich, insbesondere von Signalquellen der ersten Signale (sigTX1 und sigTX2), über ein Bussystem, vorzugsweise einen Kommunikationsbus, erfolgt und/oder
    wobei ein Taktratenabgleich, insbesondere von Taktraten von Signalquellen der ersten Signale (sigTX1 und sigTX2), über Funkwellen und/oder über eine Kabelverbindung, insbesondere bei Betrieb als Primärradar, erfolgt.

4.  Verfahren nach einem der vorangehenden Ansprüche, wobei eine Synchronisation der nicht-kohärenten Sende-Empfangseinheiten (NKSE1, NKSE2), insbesondere eine Vorsynchronisation durch eine Bestimmung einer Frequenz-Drift über mehrere Rampen nacheinander erfolgt, insbesondere bei Verwendung eines Sekundärradars.

5.  Verfahren nach einem der vorangehenden Ansprüche, wobei ein Offset, insbesondere ein Zeitoffset und/oder ein Frequenzoffset, über ein Bussystem bestimmt wird, vorzugsweise bei Betrieb als Primärradar.

6. Verfahren nach einem der vorangehenden Ansprüche, wobei ein/der Offset, insbesondere ein/der Zeitoffset und/oder ein/der Frequenzoffset, über eine Auswertung einer Position von, insbesondere korrigierten, Maxima der Spektren der Vergleichssignale (sigC12 und sigC21), bestimmt wird.

7. Verfahren nach einem der vorangehenden Ansprüche, wobei die erste und/oder die weitere nicht-kohärente Sende- und Empfangseinheit mindestens eine Auswerteeinrichtung zur Durchführung der einzelnen Verfahrensschritte, insbesondere Berechnungen und Auswertungen aufweist, wobei die jeweilige Auswerteeinrichtung
ggf. eine körperlich eigenständige Auswerteeinrichtung ist, die an die jeweilige Sende- und Empfangseinheit bzw. die übrigen Komponenten der jeweiligen Sende- und Empfangseinheit angeschlossen ist oder
ggf. in die erste und/oder die weitere nicht-kohärente Sende- und Empfangseinheit, beispielsweise in einem gemeinsamen Gehäuse und/oder als Baueinheit, integriert ist.

8. Verfahren nach einem der vorangehenden Ansprüche, wobei die Vergleichssignale (sigC12 und sigC21) zu einer, insbesondere gemeinsamen, Auswerteeinheit übertragen werden und dort zur Auswertung beide vorliegen, wobei die gemeinsame Auswerteeinheit, optional, die erste nicht-kohärente Sende-Empfangseinheit (NKSE1) oder, optional, die zweite nicht-kohärente Sende-Empfangseinheit (NKSE2) oder, optional, eine andere, insbesondere separate, Auswerteeinheit ist.

9. Verfahren nach einem der vorangehenden Ansprüche, wobei die ersten Signale (TX1 und TX2) zumindest zeitlich überlappend gesendet werden, wobei das weitere erste Signal (TX2) der weiteren nicht-kohärenten Sende-Empfangseinheit (NKSE2) vorzugsweise zumindest während der Hälfte der Signaldauer des ersten Signals (TX1) der ersten nicht-kohärenten Sende-Empfangseinheit (NKSE2), weiter vorzugsweise zumindest annähernd gleichzeitig, gesendet wird.

10. Verfahren nach einem der vorangehenden Ansprüche, wobei vor der mathematischen Operation die Spektren der Vergleichssignale auf den höchsten Wert normalisiert werden.

11. System zur Verringerung von Störungen durch Phasenrauschen in einem Radarsystem mit Einheiten zur Durchführung des Verfahrens nach einem der vorangehenden Ansprüche, insbesondere umfassend:

    - eine erste nicht-kohärente Sende-Empfangseinheit (NKSE1) zur Erzeugung eines ersten Signals (sigTX1) und zum Senden, insbesondere Ausstrahlen, des ersten Signals (sigTX1) über einen Pfad (SP),
    - eine weitere, insbesondere zweite, nicht-kohärente Sende-Empfangseinheit (NKSE2) zur Erzeugung eines ersten Signals (sigTX2) und zum Senden (insbesondere Ausstrahlen) des ersten Signals (sigTX2) über den Pfad (SP),
    - wobei die nicht-kohärenten Sende-Empfangseinheiten (NKSE1 und NKSE2) ausgebildet sind, die ersten Signale (sigTX1 und sigTX2) in der jeweils anderen Sende-Empfangseinheit auf direktem oder indirektem Weg zu empfangen und dort als Empfangssignale (sigRX12 und sigRX21) weiter zu verarbeiten,
    - wobei die erste Sende-Empfangseinheit (NKSE1) ausgebildet ist, ein Vergleichssignal (sigC12) aus deren ersten Signal (sigTX1) und aus einem solchen von der weiteren Sende-Empfangseinheit (NKSE2) über den Pfad (SP) empfangenen ersten Signal (sigRTX2) zu bilden und
    - wobei die weitere Sende-Empfangseinheit (NKSE2) ausgebildet ist, ein weiteres Vergleichssignal (sigC21) aus deren ersten Signal (sigTX2) und aus einem solchen von der ersten Sende-Empfangseinheit (NKSE1) über den Pfad (SP) empfangenen ersten Signal (sigTX1) zu bilden.
    - wobei eine Übertragungseinheit vorgesehen ist, um das weitere Vergleichssignal (sigC21) von der weiteren Sende-Empfangseinheit (NKSE2) zu der ersten Sende-Empfangseinheit (NKSE1) zu übertragen, insbesondere zu kommunizieren,
    - wobei mindestens eine Auswerteeinheit vorgesehen ist, die ausgebildet ist, um in einem ersten Schritt Abweichungen der Vergleichssignale (sigC21 und sigC12), die durch systematische Abweichungen in den Sende-Empfangseinheiten (NKSE2, NKSE1) hervorgerufen werden, zu kompensieren und um in einem zweiten Schritt zumindest einen komplexen Wert aus einem ersten der beiden Vergleichssignale oder aus einem Signal, das aus diesem ersten Vergleichssignal abgeleitet wurde, dazu zu verwenden, zumindest einen komplexen Wert des zweiten der beiden Vergleichssignale oder einen Wert eines Signals, das aus diesem zweiten Vergleichssignal abgeleitet wurde, anzupassen und so ein angepasstes Signal (sigCC) zu bilden, wobei die Anpassung derart geschieht, dass durch eine mathematische Operation die vektorielle Summe oder die Differenz der komplexen Werte gebildet wird.

12. System nach Anspruch 11, wobei ein Bussystem, insbesondere ein Kommunikationsbus, für einen Taktratenabgleich, insbesondere von Signalquellen der ersten Signale (sigTX1 und sigTX2), vorgesehen ist, und/oder wobei ein Bussystem für die Bestimmung eines Offsets, insbesondere Zeitoffsets und/oder Frequenzoffsets, vorgesehen ist.

13. System nach einem der Ansprüche 11 oder 12, wobei eine gemeinsame Sende- und Empfangsantenne in der ersten und/oder der weiteren nicht-kohärenten Sende-Empfangseinheit (NKSE1 und/oder NKSE2) vorgesehen ist und/oder wobei ein Transmissionsmischer in dem Pfad (SP) vorgesehen ist.

14. Verwendung des Verfahrens nach einem der Ansprüche 1 bis 10 für ein System mit zumindest je einer gemeinsamen Sende- und Empfangsantenne in der ersten und/oder zweiten nicht-kohärenten Sende-Empfangseinheit (NKSE1 und/oder NKSE2).

15. Verwendung des Systems nach einem der Ansprüche 11 bis 13 zur Verringerung von Störungen durch Phasenrauschen in einem Radarsystem..

**Claims**

1. A method for reducing interference due to phase noise in a radar system, in which

   - in a first noncoherent transceiver unit (NKSE1), a first signal (sigTX1) is generated and transmitted, in particular emitted, via a path (SP),
   - in a further, in particular second noncoherent transceiver unit (NKSE2), a first signal (sigTX2) is generated and transmitted, in particular emitted, via the path (SP),
   - the first signals (sigTX1 and sigTX2) are received directly or indirectly in the respective other transceiver unit and are processed further therein as received signals (sigRX12 and sigRX21),
   - in the first transceiver unit (NKSE1), a comparison signal (sigC12) is formed from its first signal (sigTX1) and from such a first signal (sigRTX2) received from the further transceiver unit (NKSE2) via the path (SP), and
   - in the further transceiver unit (NKSE2), a further comparison signal (sigC21) is formed from its first signal (sigTX2) and from such a first signal (sigTX1) received from the first transceiver unit (NKSE1) via the path (SP),
   - wherein the further comparison signal (sigC21) is transmitted, in particular communicated, from the further transceiver unit (NKSE2) to the first transceiver unit (NKSE1),
   - wherein in a first step, deviations of the comparison signals (sigC21 and sigC12), which are induced by systematic deviations in the transceiver units (NKSE2, NKSE1), are compensated for,
   - wherein in a second step, at least one complex value from a first of the two comparison signals or from a signal which was derived from this first comparison signal is used to adapt at least one complex value of the second of the two comparison signals or a value of a signal which was derived from this second comparison signal, and thus to form an adapted signal (sigCC),
   - wherein the adaptation takes place such that by a mathematical operation, the vectorial sum or the difference of the complex values is formed.

2. The method according to Claim 1, wherein the transmitted signals (sigTX1 and sigTX2) are FMCW modulated.

3. The method according to Claim 1 or 2, wherein a clock rate equalization, in particular of signal sources of the first signals (sigTX1 and sigTX2), takes place via a bus system, preferably a communication bus, and/or
   wherein a clock rate equalization, in particular of clock rates of signal sources of the first signals (sigTX1 and sigTX2), takes place via radio waves and/or via a cable connection, in particular upon operation as a primary radar.

4. The method according to any one of the preceding claims, wherein a synchronization of the noncoherent transceiver units (NKSE1, NKSE2) takes place, in particular a pre-synchronization by a determination of a frequency drift over multiple ramps in succession, in particular upon use of a secondary radar.

5. The method according to any one of the preceding claims, wherein an offset, in particular a time offset and/or a frequency offset, is determined via a bus system, preferably upon operation as a primary radar.

6. The method according to any one of the preceding claims, wherein a/the offset, in particular a/the time offset and/or a/the frequency offset, is determined via an analysis of a position of, in particular corrected, maxima of the spectra of the comparison signals (sigC12 and sigC21).

7. The method according to any one of the preceding claims, wherein the first and/or the further noncoherent transceiver unit has at least one analysis unit for carrying out the individual method steps, in particular computations and analyses, wherein the respective analysis unit is possibly a physically independent analysis unit, which is connected to the respective transceiver unit or the remaining components of the respective transceiver unit or is possibly integrated in the first and/or the further noncoherent transceiver unit, for example, in a shared housing and/or as a modular unit.

8. The method according to any one of the preceding claims, wherein the comparison signals (sigC12 and sigC21) are transmitted to an, in particular shared, analysis unit and provided therein for the analysis of both, wherein the shared analysis unit is optionally the first noncoherent transceiver unit (NKSE1) or is optionally the second noncoherent transceiver unit (NKSE2) or is optionally another, in particular separate, analysis unit.

9. The method according to any one of the preceding claims, wherein the first signals (TX1 and TX2) are transmitted at least chronologically overlapping, wherein the further first signal (TX2) of the further noncoherent transceiver unit (NKSE2) is preferably transmitted during at least half of the signal duration of the first signal (TX1) of the first noncoherent transceiver unit (NKSE2), more preferably at least approximately simultaneously.

10. The method according to any one of the preceding claims, wherein before the mathematical operation, the spectra of the comparison signals are scaled to the highest value.

11. A system for reducing interference due to phase noise in a radar system having units for carrying out the method according to any one of the preceding claims, in particular comprising:

   - a first noncoherent transceiver unit (NKSE1) for generating a first signal (sigTX1) and for transmitting, in particular emitting, the first signal (sigTX1) via a path (SP),
   - a further, in particular second noncoherent transceiver unit (NKSE2) for generating a first signal (sigTX2) and for transmitting (in particular emitting) the first signal (sigTX2) via the path (SP),
   - wherein the noncoherent transceiver units (NKSE1 and NKSE2) are designed to receive the first signals (sigTX1 and sigTX2) in the respective other transceiver unit on a direct or indirect path and to further process them therein as received signals (sigRX12 and sigRX21),
   - wherein the first transceiver unit (NKSE1) is designed to form a comparison signal (sigC12) from its first signal (sigTX1) and from such a first signal (sigRTX2) received from the further transceiver unit (NKSE2) via the path (SP), and
   - wherein the further transceiver unit (NKSE2) is designed to form a further comparison signal (sigC21) from its first signal (sigTX2) and from such a first signal (sigTX1) received from the first transceiver unit (NKSE1) via the path (SP),
   - wherein a transmission unit is provided to transmit, in particular to communicate, the further comparison signal (sigC21) from the further transceiver unit (NKSE2) to the first transceiver unit (NKSE1),
   - wherein at least one analysis unit is provided, which is designed, in a first step, to compensate for deviations of the comparison signals (sigC21 and sigC12) which are induced by systematic deviations in the transceiver units (NKSE2, NKSE1) and, in a second step, to use at least one complex value from a first of the two comparison signals or from a signal which was derived from this first comparison signal to adapt at least one complex value of the second of the two comparison signals or a value of a signal which was derived from the second comparison signal and thus to form an adapted signal (sigCC), wherein the adaptation takes place such that, by a mathematical operation, the vectorial sum or the difference of the complex values is formed.

12. The system according to Claim 11, wherein a bus system, in particular a communication bus, is provided for a clock rate equalization, in particular of signal sources of the first signals (sigTX1 and sigTX2), and/or wherein a bus system is provided for the determination of an offset, in particular time offset and/or frequency offset.

13. The system according to any one of Claims 11 or 12, wherein a shared transceiver antenna is provided in the first and/or the further noncoherent transceiver unit (NKSE1 and/or NKSE2) and/or
wherein a transmission mixer is provided in the path (SP).

14. A use of the method according to any one of Claims 1 to 10 for a system having at least one shared transceiver antenna in each of the first and/or the second noncoherent transceiver units (NKSE1 and/or NKSE2).

15. A use of the system according to any one of Claims 11 to 13 for reducing interference due to phase noise in a radar system.

**Revendications**

**1.** Procédé pour réduire les parasites dus au bruit de phase dans un système de radar, dans lequel

- un premier signal (sigTX1) est généré dans une première unité d'émetteur-récepteur non cohérente (NKSE1) et émis, en particulier rayonné, sur un trajet (SP) ;
- un premier signal (sigTX2) est généré dans une autre, en particulier une deuxième, unité d'émetteur-récepteur non cohérente (NKSE2) et émis, en particulier rayonné, sur le trajet (SP) ;
- les premiers signaux (sigTX1 et sigTX2) sont captés directement ou indirectement dans l'autre unité d'émetteur-récepteur et traités dans celle-ci sous forme de signaux de réception (sigRX12 et sigRX21) ;
- un signal de comparaison (sigC12) est formé dans la première unité d'émetteur-récepteur (NKSE1) à partir du premier signal (sigTX1) de celle-ci et d'un premier signal (sigRTX2) capté à partir de celui-ci par l'autre unité d'émetteur-récepteur (NKSE2) sur le trajet (SP) et
- un autre signal de comparaison (sigC21) est formé dans l'autre unité d'émetteur-récepteur (NKSE2) à partir du premier signal (sigTX2) de celle-ci et d'un premier signal (sigTX1) capté à partir de celui-ci par la première unité d'émetteur-récepteur (NKSE1) sur le trajet (SP),
- l'autre signal de comparaison (sigC21) étant transmis, en particulier communiqué, de l'autre unité d'émetteur-récepteur (NKSE2) à la première unité d'émetteur-récepteur (NKSE1),
- les écarts entre les signaux de comparaison (sigC21 et sigC12) résultant des écarts systématiques dans les unités d'émetteur-récepteur (NKSE2, NKSE1) étant compensés au cours d'une première étape,
- au moins une valeur complexe formée à partir d'un premier des deux signaux de comparaison ou d'un signal dérivé de ce premier signal de comparaison étant utilisée dans une deuxième étape pour adapter au moins une valeur complexe du deuxième des deux signaux de comparaison ou une valeur d'un signal dérivé de ce deuxième signal de comparaison et pour former ainsi un signal adapté (sigCC),
- l'adaptation étant effectuée de telle façon que la somme vectorielle ou la différence des valeurs complexes est formée par une opération mathématique.

**2.** Procédé selon la revendication 1, dans lequel les premiers signaux (sigTX1 et SigTX2) sont modulés en onde continue modulée en fréquence.

**3.** Procédé selon la revendication 1 ou 2, dans lequel une compensation de la fréquence de synchronisation, en particulier de sources de signal des premiers signaux (sigTX1 et sigTX2), est réalisée par l'intermédiaire d'un système de bus, de préférence un bus de communication, et/ou
dans lequel une compensation de la fréquence de synchronisation, en particulier de sources de signal des premiers signaux (sigTX1 et sigTX2), est réalisée par l'intermédiaire d'ondes hertziennes et/ou d'une liaison par câble, en particulier lors du fonctionnement comme radar primaire.

**4.** Procédé selon l'une des revendications précédentes, dans lequel est réalisée une synchronisation des unités d'émetteur-récepteur non cohérentes (NKSE1, NKSE2), en particulier une pré-synchronisation par la détermination d'une dérive de fréquence sur plusieurs rampes successives, en particulier lors de l'utilisation d'un radar secondaire.

**5.** Procédé selon l'une des revendications précédentes, dans lequel un décalage, en particulier un décalage dans le temps et/ou un décalage de fréquence, est déterminé par un système de bus, de préférence lors du fonctionnement comme radar primaire.

**6.** Procédé selon l'une des revendications précédentes, dans lequel un/le décalage, en particulier un/le décalage dans le temps et/ou un/le décalage de fréquence, est déterminé par l'analyse d'une position de maxima, en particulier corrigés, des spectres des signaux de comparaison (sigC12 et sigC21).

**7.** Procédé selon l'une des revendications précédentes, dans lequel la première et/ou l'autre unité d'émetteur-récepteur non cohérente comporte au moins une unité d'analyse pour l'exécution des différentes étapes de procédé, en particulier des calculs et des analyses, chaque unité d'analyse

étant éventuellement une unité d'analyse physiquement autonome qui est raccordée à l'unité d'émetteur-récepteur correspondante ou aux autres composants de l'unité d'émetteur-récepteur correspondante ou

étant éventuellement intégrée dans la première et/ou l'autre unité d'émetteur-récepteur non cohérente, par exemple dans un boîtier commun et/ou sous la forme d'une unité de construction.

8. Procédé selon l'une des revendications précédentes, dans lequel les signaux de comparaison (sigC12 et sigC21) sont transmis à une unité d'analyse, en particulier commune, et y sont disponibles pour l'analyse, l'unité d'analyse commune étant, au choix, la première unité d'émetteur-récepteur non cohérente (NKSE1) ou, au choix, la deuxième unité d'émetteur-récepteur non cohérente (NKSE2) ou, au choix, une autre unité d'analyse, en particulier séparée.

9. Procédé selon l'une des revendications précédentes, dans lequel les premiers signaux (TX1 et TX2) sont émis au moins en se chevauchant dans le temps, l'autre premier signal (TX2) de l'autre unité d'émetteur-récepteur non cohérente (NKSE2) étant émis de préférence au moins pendant la moitié de la durée du premier signal (TX1) de la première unité d'émetteur-récepteur non cohérente (NKSE2) et, de préférence encore, au moins presque simultanément.

10. Procédé selon l'une des revendications précédentes, dans lequel les spectres des signaux de comparaison sont normalisés à la valeur maximale avant l'opération mathématique.

11. Système pour réduire les parasites dus au bruit de phase dans un système de radar avec des unités pour la mise en œuvre du procédé selon l'une des revendications précédentes, comprenant en particulier :

   - une première unité d'émetteur-récepteur non cohérente (NKSE1) destinée à générer un premier signal (sigTX1) et pour émettre, en particulier rayonner, le premier signal (sigTX1) sur un trajet (SP),
   - une autre, en particulier une deuxième, unité d'émetteur-récepteur non cohérente (NKSE2) destinée à générer un premier signal (sigTX2) et à émettre (en particulier à rayonner) le premier signal (sigTX2) sur un trajet (SP),
   - dans lequel les unités d'émetteur-récepteur non cohérentes (NKSE1 et NKSE2) sont conformées pour recevoir directement ou indirectement les premiers signaux (sigTX1 et sigTX2) dans l'autre unité d'émetteur-récepteur et les y traiter sous forme de signaux de réception (sigRX12 et sigRX21),
   - dans lequel la première unité d'émetteur-récepteur (NKSE1) est conformée pour former un signal de comparaison (sigC12) à partir de son premier signal (sigTX1) et d'un premier signal (sigRTX2) capté à partir de celui-ci par l'autre unité d'émetteur-récepteur (NKSE2) sur le trajet (SP) et
   - dans lequel l'autre unité d'émetteur-récepteur (NKSE2) est conformée pour former un autre signal de comparaison (sigC21) à partir de son premier signal (sigTX2) et d'un premier signal (sigTX1) capté à partir de celui-ci par la première unité d'émetteur-récepteur (NKSE1) sur le trajet (SP),
   - dans lequel l'unité de transmission est prévue pour transmettre, en particulier communiquer, l'autre signal de comparaison (sigC21) de l'autre unité d'émetteur-récepteur (NKSE2) à la première unité d'émetteur-récepteur (NKSE1),
   - dans lequel est prévue au moins une unité d'analyse conformée pour compenser, dans une première étape, les écarts entre les signaux de comparaison (sigC21 et sigC12) résultant des écarts systématiques dans les unités d'émetteur-récepteur (NKSE2, NKSE1) et, dans une deuxième étape, pour utiliser au moins une valeur complexe formée par un premier des deux signaux de comparaison ou par un signal dérivé du premier signal de comparaison pour adapter au moins une valeur complexe du deuxième des deux signaux de comparaison ou une valeur d'un signal dérivé de ce deuxième signal de comparaison et former ainsi un signal adapté (sigCC), l'adaptation étant réalisée de telle manière que la somme vectorielle ou la différence des valeurs complexes est calculée par une opération mathématique.

12. Système selon la revendication 11, dans lequel un système de bus, en particulier un bus de communication, est prévu pour une compensation de la fréquence de synchronisation, en particulier de sources de signal des premiers signaux (sigTX1 et sigTX2), et/ou dans lequel un bus est prévu pour la détermination d'un décalage, en particulier d'un décalage dans le temps et/ou d'un décalage de fréquence.

13. Système selon l'une des revendications 11 ou 12, dans lequel une antenne d'émission et de réception commune est prévue dans la première et/ou l'autre unité d'émetteur-récepteur non cohérente (NKSE1 et/ou NKSE2) et/ou dans lequel un mélangeur d'émission est prévu dans le trajet (SP).

14. Utilisation d'un procédé selon l'une des revendications 1 à 10 pour un système comprenant au moins une antenne d'émission et de réception commune dans la première et/ou l'autre unité d'émetteur-récepteur non cohérente (NKSE1 et/ou NKSE2).

**15.** Utilisation du système selon l'un des revendications 11 à 13 pour réduire les parasites dus au bruit de phase dans un système de radar.

Fig. 1

Fig. 2

**ZF-Station A**

**ZF-Station B**

Unkorreliertes Empfänger-rauschen

Korreliertes Phasenrauschen

Korreliertes Phasenrauschen jetzt als additives Signal interpretiert

# Fig. 3

Beatsignale aller Rampen: NKSE1     Beatsignale aller Rampen: NKSE2

# Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6317075 B1
- DE 102014104273 A1
- US 7940743 B
- DE 102008010536
- DE 10157931